# EUROPÄISCHE PATENTSCHRIFT

(11) **EP 2 735 767 B1**
(45) Veröffentlichungstag und Bekanntmachung des Hinweises auf die Patenterteilung: **10.06.2015**
(21) Anmeldenummer: 12007907.4
(22) Anmeldetag: 23.11.2012
(51) Int. Cl.: F16H 1/28, F16H 55/18, F16H 57/08

(54) **Verdrehspielfreies Planetengetriebe mit zueinander vorgespannten Planetenträgern**
Backlash-free planetary gear with planet carriers pre-tensioned relative to each another
Engrenage épicycloïdal sans jeu primitif avec supports épicycloïdaux prétendus entre eux

(43) Veröffentlichungstag der Anmeldung: 28.05.2014
(73) Patentinhaber: Maxon Motor AG, 6072 Sachseln (CH)
(72) Erfinder: Klein, Olaf, 79312 Emmendingen (DE); Westholt, Stefan, 79350 Sexau (DE)
(74) Vertreter: Grünecker Patent- und Rechtsanwälte PartG mbB

(56) Entgegenhaltungen:
- EP-A1- 0 505 140
- EP-A1- 1 034 923
- EP-A1- 1 813 504
- DE-A1-102008 011 147
- JP-A- H0 348 045

## Beschreibung

Die Erfindung bezieht sich auf ein verdrehspielfreies Planetengetriebe gemäß dem Oberbegriff des Anspruchs 1.

Auf dem Gebiet von Hochpräzisionsplanetengetrieben gilt die Eliminierung von Getriebespiel zwischen den das Drehmoment übertragenden Zahnrädern als wichtiges Ziel. So sind aus dem Stand der Technik bereits Planetengetriebe bekannt, in denen Planetenräder geteilt sind und diese Planetenradhälften zueinander vorgespannt sind.

Aus der DE 10 2008 011 147 A1 ist beispielsweise ein Planetengetriebe bekannt. Bei diesem Getriebe sind auf zumindest einer Planetenrotationsachse eines Planetenträgers zwei Planetenradhälften angeordnet, die gegeneinander mittels mehrerer Federstäbe vorgespannt sind. Diese Ausführung erfordert jedoch zur Vorspannung in den beiden Planetenradhälften separate Ausnehmungen einzubringen um die Federstäbe an den Planetenradhälften zu befestigen. Zum einen führt dies zu einer Schwächung der Planetenradgeometrie, zum anderen zu einem hohen Herstellaufwand aufgrund der spanenden Bearbeitung des zumeist hochfesten Zahnradstahls. Außerdem ist es überhaupt nur bis zu einem bestimmten Planetenraddurchmesser und somit einer bestimmten Größe des Planetengetriebes fertigungstechnisch möglich diese Ausnehmungen aufgrund des Platzbedarfes anzufertigen. Bei kleinen Ausführungen ist es technisch nicht mehr möglich solche Ausnehmungen anzubringen.

Weitere Lösungen für spielfreie Getriebe sind beispielsweise aus EP 0505140 A1 und aus EP 1034923 A1 bekannt.

Weiterer Stand der Technik ist beispielsweise auch aus der WO 2013/083188 A1, JP H03 048045 A, EP1813504A1, JPH08 170695 A und US2007/0093354 A1 bekannt.

Ein Planetengetriebe gemäß den Merkmalen des Oberbegriffs des Anspruchs 1 ist aus der EP 1 813 504 A1 bekannt.

Es ist somit die Aufgabe der vorliegenden Erfindung, auch für klein bauende Planetengetriebe einen Vorspannmechanismus zur Eliminierung von Getriebespiel zur Verfügung zu stellen, bei dem eine separate Bearbeitung der Planetenräder vermieden werden soll.

Diese Aufgabe wird erfindungsgemäß dadurch die Merkmale des Anspruchs 1 gelöst.

Dies hat den Effekt, dass die Planetenräder des Planetengetriebes nicht separat bearbeitet werden müssen, um eine Vorspannung zu erreichen. Der Bearbeitungsaufwand, insbesondere für Kleingetriebe, wird somit deutlich reduziert. Durch das Anbringen des Vorspannmechanismus an den beiden Planetenträgern ist es weiterhin von Vorteil, dass lediglich das weniger feste Material der Planetenträger bearbeitet werden muss, anstatt der hochfeste Zahnradstahl. Durch den Einsatz zweier Planetenträger ist es zudem von Vorteil, dass die Planetenträger zueinander verstellt werden können. Wenn die die Vorspannung zur Verfügung stellenden Elemente eine bestimmte Verschleißgrenze erreicht haben, kann der daraus resultierende Vorspannkraftverlust durch ein Verstellen der Lage der Planetenträger zueinander behoben werden. Durch diese Nachjustierung, die auch im zusammengebauten Zustand des Getriebes möglich ist, kann der Einsatz der Vorspannelemente deutlich verlängert werden.

Vorteilhafte Ausführungsformen sind in den Unteransprüchen beansprucht und werden nachfolgend erläutert.

Gemäß einer vorteilhaften Ausführung der Erfindung kann der Außendurchmesser des zusammengebauten Planetengetriebes kleiner als 40 mm, vorzugsweise kleiner als 32, besonders bevorzugt kleiner als 22 mm sein. Somit wird eine besonders effiziente Vorspannung der Planetenräder ermöglicht.

Gemäß einer weiteren vorteilhaften Ausführungsform der Erfindung kann der erste Planetenträger auch als ein vom zweiten Planetenträger separates Bauteil ausgeführt sein und beide Planetenträger um eine gemeinsame Achse, vorzugsweise um die Rotationsachse des Sonnenrades, drehbar sein. Dies vereinfacht wesentlich den Zusammenbau und eine Nachjustierung der Vorspannkraft im zusammengebauten Zustand. Eine platzsparende Ausgestaltung des Planetengetriebes und eine einfache Ausgestaltung der Vorspannelemente ist möglich.

Weiterhin ist es von Vorteil, wenn gemäß einer weiteren vorteilhaften Ausführungsform der Erfindung zumindest ein sich zwischen dem ersten und dem zweiten Planetenträger erstreckendes Federelement zur Vorspannung des ersten Planetenträgers gegen den zweiten Planetenträger vorhanden ist. Durch die Ausgestaltung als Federelement ist eine elastische Vorspannung vorhanden, um Kraftspitzen abzufedern.

Weist dieses Federelement vorzugsweise, gemäß einer vorteilhaften Ausführungsform der Erfindung, ein einteilig an dem ersten Planetenträger angeformtes erstes Ende auf, so ist es möglich, einen Planetenträger einteilig mit den Federelementen auszugestalten und somit die Bauteilkomplexität weiter zu reduzieren.

Ist gemäß einer weiteren vorteilhaften Ausführungsform der Erfindung das zumindest eine Federelement an dem ersten und/oder dem zweiten Planetenträger, vorzugsweise in einer Ausnehmung, abgestützt, so sind die Punkte zum Einleiten der Vorspannkraft an die Planetenträger klar definiert und die Federelemente werden zudem in eine seitliche Richtung, senkrecht zur Rotationsachse des Sonnenrades, gehalten.

Weiterhin kann gemäß einer vorteilhaften Ausführungsform der Erfindung das zumindest eine Federelement ein zweites, stabförmiges Ende aufweisen, das in der vorzugsweise als Bohrung ausgeführten Ausnehmung des zweiten Planetenträgers mittels eines Formschlusses gehalten ist, wobei vorzugsweise eine Öffnung der Bohrung, durch die das Federelement in den Formschluss gesteckt ist, dem ersten Planetenträger zugewandt ist. Somit wird eine kostengünstige Ausgestaltung der Halterung des Federelementes ermöglicht, wodurch das Federelement weiterhin platzsparend zwischen den Planetenträgern eingespannt werden kann.

Gemäß einer vorteilhaften Ausführung der Erfindung kann der Durchmesser der Bohrung des zweiten Planetenträgers an zumindest einer ersten Abstufung zu dem ersten Planetenträger hin erweitert sein. Durch diese Erweiterung der Bohrung kann sich das Federelement bereits innerhalb der Bohrung verformen, wodurch größere Biegeradien des Federelementes ermöglicht werden.

Ist das stabförmige Ende des Federelementes stirnseitig an einer zweiten, an den Formschluss angrenzenden Abstufung, gemäß einer weiteren vorteilhaften Ausführungsform der Erfindung, abgestützt, so ist die Lage des Federelementes in axialer Richtung, also in Richtung der Rotationsachse des Sonnenrades, gesichert.

Gemäß einer vorteilhaften Ausführungsform der Erfindung kann an die Ausnehmung eine Entlüftung anschließen. Dadurch wird ein Überdruck in der Bohrung vermieden, nachdem das Federelement in den Formschluss eingeschoben wurde. Eine derartige Entlüftung kann beispielsweise durch eine Durchgangsbohrung ermöglicht werden.

Wenn in einer weiteren vorteilhaften Ausführungsform der Erfindung die Anzahl der an dem ersten Planetenträger angeordneten Planetenräder der Anzahl der an dem zweiten Planetenträger gelagerten Planetenrädern entspricht, wobei vorzugsweise die Anzahl der Federelemente der Anzahl der in dem ersten Planetenträgern gelagerten Planetenrädern entspricht, so kann je ein Planetenradpaar gebildet werden, zudem ein separates Federelement zugeordnet ist, um die Vorspannung gleichmäßig um den Umfang des Planetenträgers herum zu verteilen.

Wenn gemäß einer erfindungsgemäßen Ausführungsform das Planetengetriebe entweder genau drei Federelemente, genau drei erste sowie genau drei zweite Planetenräder, oder genau vier Federelemente, genau vier erste sowie genau vier zweite Planetenräder umfasst, so ist eine besonders stabile Ausgestaltung des Planetengetriebes möglich.

In einer weiteren erfindungsgemäßen Ausführungsform kann zumindest ein Federelement als Federstab ausgebildet sein, der im unverspannten Zustand gerade verläuft und über seine Länge einen konstanten, runden Querschnitt aufweist. Durch die Verwendung von Federstäben kann eine preisgünstige Vorspannung der Planetenträger zueinander ermöglicht werden.

Auch können gemäß einer weiteren vorteilhaften Ausführung der Erfindung die Planetenräder des ersten Planetenträgers und des zweiten Planetenträgers durch deren Anliegen an dem Sonnenrad und dem Hohlrad zueinander vorgespannt sein. Dadurch wird die Komplexität der für die spielfreie Konstruktion verwendeten Vorspannmechanik reduziert.

In einer weiteren vorteilhaften Ausführungsform der Erfindung sind im vorgespannten Zustand Zahnflanken des zumindest einen, an dem ersten Planetenträger angeordneten Planetenrades an einer ersten Seite von Zahnflanken des Hohlrades und einer ersten Seite von Zahnflanken des Sonnenrades anliegend, und Zahnflanken des zumindest einen, an dem zweiten Planetenträger angeordneten Planetenrades an einer zweiten, der ersten Seite der Zahnflanken des Sonnen- und Hohlrades entgegengesetzten Seite der Zahnflanken des Hohlrades und des Sonnenrades anliegend. Somit wird die entsprechende Gegenkraft zur Vorspannung auf unkomplizierte Weise ermöglicht.

Entsprechend einer vorteilhaften Ausführungsform der Erfindung kann zumindest ein Federelement, vorzugsweise an einer Stirnseite, mittels Klebstoff oder eines Pressitzes an zumindest einem der ersten und zweiten Planetenträger befestigt sein. Eine zusätzliche Fixierung der Federelemente in den Planetenträgern, wie den Ausnehmungen, ist somit einfach gewährleistet.

Erstreckt sich gemäß einer weiteren vorteilhaften Ausführung der Erfindung das zumindest eine Federelement außerhalb der Planetenräder des ersten und/oder zweiten Planetenträgers zwischen den Planetenträgern, so ist die Ausgestaltung der Planetenräder unbeeinflusst von der der Federelemente. Außerdem kann eine geradlinige Verbindung zwischen den Planetenträgern umgesetzt werden, die den Platzbedarf der Federelemente reduziert.

In einer vorteilhaften Ausführungsform der Erfindung kann der erste Planetenträger mit dem zweiten Planetenträger verbunden sein. Somit ist die Nachjustierbarkeit zwischen diesen beiden Planetenträgern besonders einfach gewährleistet.

Sind gemäß einer vorteilhaften Ausführung der Erfindung die mehreren Federelemente im gleichen Winkelabstand zueinander, um die Rotationsachse des ersten und/oder zweiten Planetenträgers angeordnet, so ist eine gleichmäßige Verteilung der Federelemente um den Umfang des Planetenträgers und somit eine gleichmäßige Kraftverteilung auf die Federstäbe gewährleistet.

Besonders, wenn in einer weiteren vorteilhaften Ausführungsform der Erfindung, jedes der Federelemente in einem Winkel von 40-50°, vorzugweise 44° zu der Rotationsachse der Planetenräder des ersten und/oder zweiten Planetenträgers versetzt am ersten und am zweiten Planetenträger angeordnet ist, ist diese gleichmäßige Kraftverteilung besonders einfach bewerkstelligt.

Ist gemäß einer vorteilhaften Ausführungsform der Erfindung das Material aus dem zumindest ein Federelement hergestellt ist, Federstahl, Hartmetall oder metallisches Glas, so ist es möglich eine besonders langlebige, hochfeste und elastische Vorspannvorrichtung zur Verfügung zu stellen.

Ist das Sonnenrad gemäß einer weiteren vorteilhaften Ausführungsform der Erfindung aus Chrom-Molybdän-Stahl gefertigt und vorzugsweise vergütet und/oder nitrocarburiert, so weist das Sonnenrad eine besonders hohe Verschleißfestigkeit auf.

Weist das Planetengetriebe gemäß einer erfindungsgemäßen Ausführungsform der Erfindung zudem mehrere vorgespannte Planetenstufen auf, so ist es möglich, auch komplexere Getriebe mit einer Vielzahl verschiedener Gänge im spielfreien Modus zu schalten.

Die Erfindung wird nachfolgend anhand eines Ausführungsbeispiels mithilfe von Figuren in einer Zeichnung näher erläutert. Es zeigen:
- Figur 1: eine Explosionsansicht des erfindungsgemäßen, spielfreien Planetengetriebes in isometrischer Darstellung,
- Figur 2: eine Vorderansicht eines Planetenträgers der Erfindung, in einer Ebene senkrecht zu der Rotationsachse des Sonnenrades, und
- Figur 3: eine Schnittdarstellung entlang der in Figur 2 dargestellten Linie im Bereich einer Ausnehmung zur Aufnahme eines Federelementes.

Die Figuren sind lediglich schematischer Natur und dienen nur dem Verständnis der Erfindung. Die gleichen Elemente werden mit den gleichen Bezugszeichen versehen.

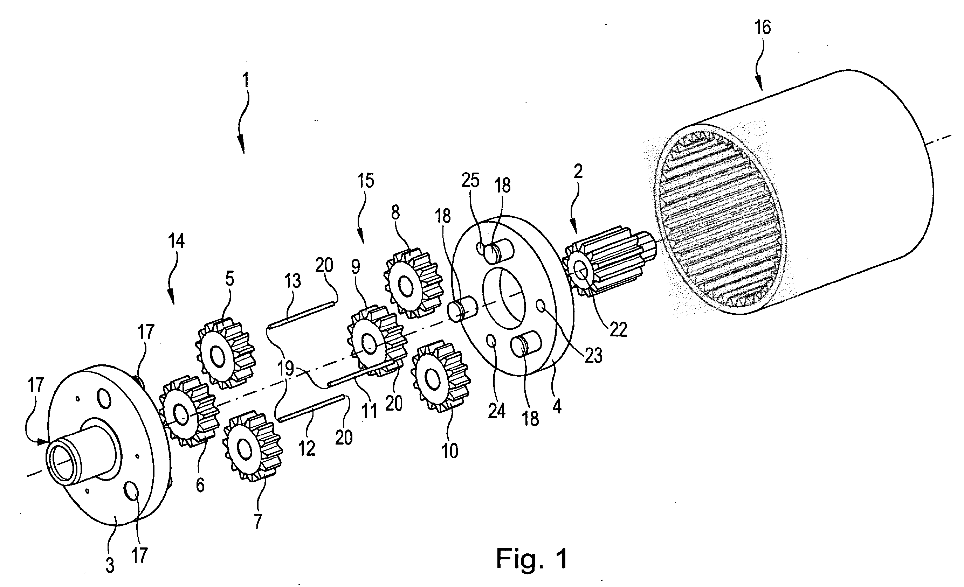

Figur 1 zeigt ein erfindungsgemäßes Planetengetriebe 1 mit einem zentral angeordneten Sonnenrad 2, das auf einer zentralen Rotationsachse 22 drehbar gelagert ist. Die parallel zu dieser Rotationsachse verlaufenden Zähne des Sonnenrades 2 sind mit Planetenrädern 5, 6, 7, 8, 9, 10 kämmend in Wirkbeziehung. Wiederum mit diesen Planetenrädern 5, 6, 7, 8, 9 und 10, die von Planetenträgern 3, 4 getragen sind, ist ein Hohlrad 16 kämmend in Wirkbeziehung.

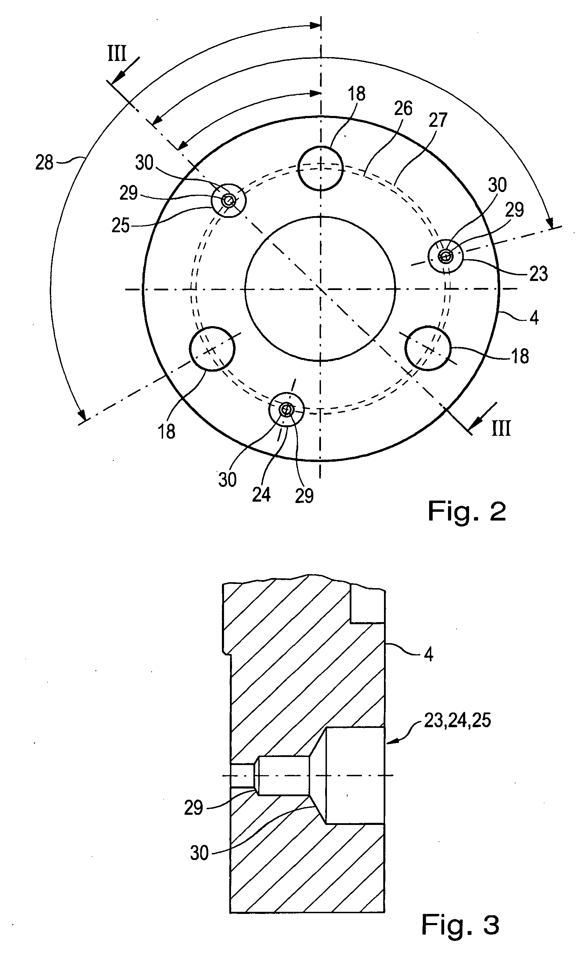

Zur Aufnahme dreier Planetenräder 5, 6, 7 umfasst ein erster Planetenträger 3 drei Zapfenelemente 17, an welchen Zapfenelementen 17 je ein Planetenrad 5, 6 oder 7 drehbar um eine Planetenrotationsachse gelagert ist. Die Zapfenelemente 17 sind so an dem ersten Planetenträger 3 angeordnet, dass die gelagerten Planetenräder 5, 6, 7 mit ihrer Planetenrotationsachse parallel zur zentralen Rotationsachse 22 des Sonnenrades 2 ausgerichtet sind. Die Zapfenelemente 17 sind dabei äquidistant entlang einer ersten Kreisumfangslinie 26 in Figur 2 an dem ersten Planetenträger 3 angeordnet, so dass der Winkelabstand zwischen den Planetenrotationsachsen benachbarter Planetenrädern 5, 6, 7 120° beträgt. Diese Winkelabstände sind besonders gut in Figur 2 zu erkennen. Der erste Planetenträger 3 ist weiterhin um die zentrale Rotationsachse 22 des Sonnenrades 2 drehbar gelagert.

In Richtung der Planetenräder 5, 6, 7, die allesamt auf derselben Seite des Planetenträgers 3 angeordnet sind, ist ein zweiter Planetenträger 4 positioniert, der wiederum drei Planetenräder 8, 9 und 10 aufweist, wobei die Planetenräder 5, 6, 7 auf der dem zweiten Planetenträger 4 zugewandten Seite des Planetenträgers 3 angeordnet sind. Diese drei Planetenräder 8, 9 und 10 des zweiten Planetenträgers 4 sind in ähnlicher Weise wie die Planetenräder 5, 6, 7 am ersten Planetenträger 3, am zweiten Planetenträger 4 angeordnet. So umfasst auch der zweite Planetenträger 4 drei Zapfenelemente 18, die wiederum zur Aufnahme der drei Planetenräder 8, 9, 10 dienen und jedes Planetenrad 8, 9 oder 10 auf einer, zu der zentralen Rotationsachse 22 des Sonnenrades 2 parallelen Planetenrotationsachse lagern. Auch die Planetenräder 8, 9 und 10 des zweiten Planetenradsatzes 15 sind in gleichen Winkelabständen am zweiten Planetenträger 4 angeordnet, nämlich entlang einer Kreisumfangslinie um 120° versetzt. Auch die Planetenräder 8, 9, 10 des zweiten Planetenträgers 4 sind auf einer Seite des Planetenträgers 4 angeordnet, in der Art, dass die die Planetenräder 5, 6, 7 und 8, 9, 10 aufnehmenden Seiten der Planetenträger 3 und 4 einander zugewandt sind. Der zweite Planetenträger 4 ist dabei ebenfalls um die zentrale Rotationsachse 22 des Sonnenrades 2 drehbar gelagert. Wie aus Figur 1 zu erkennen ist, sind die beiden Planetenträger 3, 4 als zwei unterschiedliche, voneinander getrennte Bauteile ausgestaltet. Der erste Planetenträger 3 ist so zu dem zweiten Planetenträger 4 verdreht, dass die Planetenrotationsachsen der Planetenräder 5, 6, 7 des ersten Planetenträgers 3 im Wesentlichen koaxial zu den Planetenrotationsachsen der Planetenräder 8, 9, 10 des zweiten Planetenträgers 4, 4 verlaufen. Die drei Planetenräder 5, 6, 7 des ersten Planetenträgers 3 bilden einen ersten Planetenradsatz 14 und die drei Planetenräder 8, 9, 10 des zweiten Planetenträgers 4 einen zweiten Planetenradsatz 15.

Zur Vorspannung der beiden Planetenträger 3 und 4 zueinander und somit der darauf gelagerten Planetenräder 5, 6, 7 des ersten Planetenträgers 3 zu den Planetenrädern 8, 9, 10 des anderen, zweiten Planetenträgers 4, sind drei Federelemente 11, 12, 13 vorhanden. Diese Federelemente 11, 12, 13 sind als Federstäbe ausgebildet. Die Federstäbe sind im unbelasteten Zustand gerade verlaufend und weisen einen kreisrunden Querschnitt auf.

Der erste Planetenträger 3 und die Federelemente 11, 12, 13 sind aus einem Stück. Ein erstes, dem ersten Planetenträger 3 zugewandtes Ende 19 der Federelemente 11, 12, 13 ist dabei stirnseitig an den ersten Planetenträger angeformt, um die Federelemente 11, 12,13 einstückig mit dem ersten Planetenträger 3 auszugestalten. Im unbelasteten Zustand verlaufen die drei Federelemente 11, 12, 13 im Wesentlichen parallel zur zentralen Rotationsachse 22 des Sonnenrades 2.

Das dem ersten Ende 19 der Federelemente 11, 12, 13 entgegengesetzte zweite Ende 20 stützt sich am zweiten Planetenträger 4 ab. Hierfür ist je Federelement 11, 12, 13 eine als Bohrung ausgeformte Ausnehmung 23, 24, 25 vorgesehen, die wiederum im Wesentlichen parallel zur Rotationsachse 22 des Sonnenrades 2 verläuft.

Nähere Details zu diesen Ausnehmungen 23, 24, 25 sind aus den Figuren 2 und 3 ersichtlich. So offenbart Figur 3, dass die Bohrung jeder Ausnehmung mehrstufig, hier zweistufig ausgebildet ist. In einem Durchmesser kleiner als der Durchmesser des zweiten, stabförmigen Endes 20 des Federelementes 11, 12, 13 ist eine Durchgangsbohrung in dem zweiten Planetenträger 4 mit einem ersten Durchmesser eingebracht. Diese Durchgangsbohrung verläuft im Wesentlichen parallel zur Rotationsachse 22 des Sonnenrades 2 und ist ab einer ersten Abstufung 29 auf einen Bohrungsdurchmesser mit einem zweiten, größeren Durchmesser aufgebohrt. Dieser zweite Durchmesser besitzt denselben Durchmesser wie das zweite Ende 20 des jeweiligen Federelementes 11, 12, 13, so dass ein Formschluss des jeweiligen Federelementes 11, 12, 13 in diesem zweiten Bohrungsdurchmesser gebildet ist. Optional kann hier auch ein Presssitz vorgesehen sein. Die zwischen dem ersten und dem zweiten Durchmesser gebildete erste Abstufung 29 dient zur Abstützung der Stirnseite des zweiten Endes 20 des jeweiligen Federelements 11, 12, 13. Weiterhin weist die Bohrung eine zweite Abstufung 30 auf, an der der Bohrungsdurchmesser ein zweites Mal, auf einen dritten Durchmesser aufweitet, wobei dieser der größte Durchmesser ist und so gewählt ist, dass jedes der Federelemente 11, 12, 13 in dem Abschnitt des dritten Durchmessers Spiel hat.

An der ersten Abstufung 29, an der sich das stirnseitige zweite Ende 20 des Federelementes 11, 12, 13 abstützt, ist bei der Montage des Federelementes 11, 12, 13 vorzugsweise ein Kleber aufgetragen, um die Stirnseite des Federelementes 11, 12, 13 durch eine zusätzliche Klebekraft an dieser ersten Abstufung 29 zu fixieren. Die Durchgangsbohrung, die durch den Planetenträger 4 hindurchreicht, dient hierbei zur Entlüftung, um sowohl einen Druckausgleich mit der Umgebungsluft beim Zusammenstecken des stirnseitigen zweiten Endes 20 des Federelementes 11, 12, 13 und dem Planetenträger 4, als auch ein optimales Trocknen des im Bereich der ersten Abstufung 29 aufgetragenen Klebestoffes zu ermöglichen.

Wie besonders gut aus Figur 2 ersichtlich ist, sind auch die als Bohrungen ausgeführten Ausnehmungen 23, 24, 25 zur Aufnahme des zweiten Endes 20 der Federelemente 11, 12, 13 in einem gleichen Winkelabstand um eine zweite Kreisumfangslinie 27 des Planetenträgers 4 angeordnet. Der Abstand zwischen den einzelnen Längsachsen der Ausnehmungen 23, 24, 25 untereinander beträgt hierbei 120°. Wie weiterhin ebenfalls ersichtlich ist der Umfangskreis 26, auf dem die Planetenrotationsachsen der Planetenräder 8, 9, 10 angeordnet sind, konzentrisch mit dem Umfangskreis 27, auf dem die Längsachsen der Ausnehmungen 23, 24, 25 angeordnet sind ausgebildet, wobei der Umfangskreis 27 einen größeren Durchmesser aufweist als der Umfangskreis 26. Jede Ausnehmung 23, 24, 25 ist so zwischen zwei benachbarten Zapfenelementen 18 angeordnet, dass der Winkelabstand zwischen den Längsachsen der einzelnen Ausnehmungen 23, 24, 25 zu den Zapfenelementen 18 der Planetenräder 8, 9, 10 zwischen 40 und 50°, vorzugsweise zwischen 43 und 45°, vorzugweise bei 44° liegt. In diesem Ausführungsbeispiel beträgt dieser Winkelabstand 44°.

Die Bauweise des Planetengetriebes 1 ist für Kleingetriebe optimiert, deren Außendurchmesser, nämlich der Außendurchmesser des Hohlrades, kleiner als 40, vorzugsweise 32, vorzugsweise 22, vorzugsweise 16, vorzugsweise 13, vorzugsweise 6 mm nicht überschreitet.

Das Planetengetriebe 1 ist als verdrehspielfreies Planetengetriebe 1 ausgeführt, in dem das Spiel im Planetengetriebe 1 durch ein Vorspannen zumindest zweier Planetenräder 5 bis 10 gegeneinander nahezu vollständig oder vollständig beseitigt wird, wobei die zumindest zwei Planetenräder 5 bis 10 mit dem Sonnenrad 2 und dem Hohlrad 16 in Anlage befindlich sind. Die zwei Planetenräder 5 bis 10 sind dabei gegensinnig in Umfangsrichtung der Planetenräder 5 bis 10 vorgespannt.

Die in dem ersten Planetenträger 3 angeordneten Planetenräder 5, 6, 7 liegen im vorgespannten, zusammengebauten Zustand mittels Zahnflanken an einer ersten Seite von Zahnflanken des Hohlrades 16 und einer ersten Seite von Zahnflanken des Sonnenrades 2 an. Zugleich liegen Zahnflanken der an dem zweiten Planetenträger 4 angeordneten Planetenräder 8, 9, 10 an einer zweiten, der ersten Seite der Zahnflanken des Sonnen- und Hohlrades 2, 16 entgegengesetzten Seite der Zahnflanken des Hohlrades 16 und des Sonnenrades 2 an.

In der vorliegenden Ausführungsform, die in Fig. 1 dargestellt ist, sind die Planetenräder 5, 6 ,7 mit dem Sonnenrad 2 und dem Hohlrad 16 und auch die Planetenräder 8, 9, 10 des zweiten Planetenradsatzes 15 mit dem Sonnenrad 2 und dem Hohlrad 16 in Eingriff.

Alternativ zu der in Verbindung mit Figur 1 beschriebenen einteiligen Ausführung des ersten Planetenträgers 3 mit den Federelementen 11, 12, 13, können die Federelemente 11, 12, 13 auch getrennt vom ersten Planetenträger 3 ausgebildet sein. So kann jedes erste Ende 19 der drei Federelemente 11, 12, 13 in einer weiteren Ausnehmung des ersten Planetenträgers 3 abgestützt sein. In diesem Fall sind die Ausnehmungen in gleicher, wie die zuvor beschriebenen Ausnehmungen 23, 24, 25 des zweiten Planetenträgers 4 ausgestaltet und die ersten Enden 19 der Federelemente 11, 12, 13 im ersten Planetenträger 3 wie die zweiten Enden 20 im zweiten Planetenträger 4 befestigt. Auch ist es weiterhin möglich, die ersten und/ oder zweiten Enden 19, 20 der Federelemente 11, 12, 13 auf andere Weise an einem der Planetenträger zu befestigen, beispielsweise durch Verschraubung eines Endes mit einem Innengewinde des jeweiligen Planetenträgers 3, 4.

Die als Federstäbe ausgeführten Federelemente 11, 12, 13 sind für eine optimale Kraftübertragung aus Federstahl hergestellt. Um die mechanische Festigkeit zu steigern können die Federelemente 11, 12, 13 aber auch aus einem Hartmetall oder einem metallischen Glasmaterial hergestellt sein.

Das Sonnenrad 2, das hohe Verschleißkräfte aushalten muss, wird aus Chrom-Molybdän-Stahl hergestellt, der vergütet und/oder nitrocarburiert ist.

Ebenfalls ist es möglich, neben der dargestellten ersten Planetenstufe noch weitere Planetenstufen in dem Planetengetriebe 1 zu integrieren, die vorzugweise ebenfalls vorgespannt sind.

Bei einer weiteren Ausführung, die in der Zeichnung nicht dargestellt ist, ist es auch möglich vier Planetenräder je Planetenträger 3, 4 zu verwenden, wobei der Winkelabstand zwischen den Planetenrotationsachsen benachbarter Planetenräder im Wesentlichen 90° beträgt. Bei einer Ausführung mit vier Planetenrädern je erstem und zweitem Planetenträger 3, 4 sind auch vier Federelemente vorhanden, die zueinander um 90° versetzt in die beiden Planetenträger 3, 4 eingreifen. Die vier Planetenräder jedes Planetenträgers 3, 4 und die vier Federelemente sind in gleicher Weise wie die zuvor beschriebenen drei Planetenräder 5-10 jedes Planetenträgers 3, 4 ausgeführt und gelagert. Zwischen zwei benachbarten Planetenrädern eines Planetenträgers 3, 4 ist folglich ein Federelement im jeweiligen Planetenträger 3, 4 verankert.

Um das Planetengetriebe 1 zusammenzubauen und die Planetenträger 3, 4 sowie deren Planetenräder 5 bis 10 gegeneinander in Vorspannung zu bringen, wird zunächst jedes der Planetenräder 5 bis 10 auf ein Zapfenelement 17, 18 gesteckt. Anschließend werden die Federelemente 11, 12, 13 des ersten Planetenträgers 3 in die Ausnehmungen 23, 24, 25 des zweiten Planetenträgers 4 gesteckt. Anschließend werden dann das Sonnenrad 2 sowie das Hohlrad 16 in Eingriff mit den Planetenrädern 5 bis 10 beider Planetenträger 3, 4 gebracht. Zunächst wird der erste Planetenradsatz 14 in Wirkbeziehung mit dem Sonnenrad 2 und dem Hohlrad 16 gebracht, anschließend wird ein gewisses Drehmoment auf den zweiten Planetenträger 4 aufgebracht, um den zweiten Planetenträger 4 relativ zu dem ersten Planetenträger 3 zu verdrehen, die Federelemente 11, 12, 13 zu verformen und somit eine Vorspannung zu gewährleisten. Wenn die Zähne des ersten Planetenradsatzes 14 mit denen des zweiten Planetenradsatzes 15 fluchten, kann der zweite Planetenradsatz 15 ebenfalls auf die Zähne des Hohlrades 16 und des Sonnenrades 2 geschoben werden, um somit ebenfalls mit diesen beiden Rädern 2, 16 zu kämmen.

## Patentansprüche

1. Verdrehspielfreies Planetengetriebe (1) mit einem Sonnenrad (2) und mit einem Hohlrad (16), die mit zumindest einem ersten Planetenrad (5) einer Planetenstufe kämmen, wobei die Planetenstufe einen ersten Planetenträger (3) aufweist, an dem das erste Planetenrad (5) drehbar gelagert ist, wobei ferner in der Planetenstufe zumindest ein zweites Planetenrad (8) vorhanden ist, das ebenfalls mit dem Hohlrad (10) und dem Sonnenrad (2) kämmt, wobei das zumindest eine zweite Planetenrad (8) an einem zweiten Planetenträger (4) der Planetenstufe drehbar gelagert ist, wobei die beiden Planetenträger (3, 4) in Umfangsrichtung des Sonnenrades (2) so gegeneinander vorgespannt sind, dass auch das zumindest eine erste Planetenrad (5) gegenüber dem zumindest einen zweiten Planetenrad (8) in Umfangsrichtung des Sonnenrades (2) verspannt ist, **dadurch gekennzeichnet, dass** das erste Planetenrad (5) und das zweite Planetenrad (8) zwischen dem ersten Planetenträger (3) und dem zweiten Planetenträge (4) angeordnet sind.

2. Planetengetriebe nach Anspruch 1, **dadurch gekennzeichnet, dass** der Außendurchmesser des zusammengebauten Planetengetriebes (1) kleiner als 40 mm, vorzugsweise kleiner als 32 mm, besonders bevorzugt kleiner als 22 mm ist.

3. Planetengetriebe nach einem der vorherigen Ansprüche, **dadurch gekennzeichnet, dass** der erste Planetenträger (3) als ein vom zweiten Planetenträger (4) separates Bauteil ausgeführt ist und beide Planetenträger (3, 4) um eine gemeinsame Achse, vorzugsweise um die Rotationsachse (22) des Sonnenrades (2), drehbar sind.

4. Planetengetriebe nach einem der vorherigen Ansprüche, **dadurch gekennzeichnet, dass** zumindest ein sich zwischen dem ersten und zweiten Planetenträger (3, 4) erstreckendes Federelement (11, 12, 13) zur Verspannung des ersten Planetenträgers (3) gegen den zweiten Planetenträger (4) vorhanden ist.

5. Planetengetriebe nach Anspruch 4, **dadurch gekennzeichnet, dass** das Federelement (11, 12, 13) ein einteilig an dem ersten Planetenträger (3) angeformtes, erstes Ende (19) aufweist.

6. Planetengetriebe nach einem der Ansprüche 4 oder 5, **dadurch gekennzeichnet, dass** sich das Federelement (11, 12, 13) an dem ersten und/oder dem zweiten Planetenträger (3, 4) in einer Ausnehmung (23, 24, 25) abstützt.

7. Planetengetriebe nach Anspruch 6, **dadurch gekennzeichnet, dass** das Federelement (11, 12, 13) ein zweites, stabförmiges Ende (20) aufweist, das in der als Bohrung ausgeführten Ausnehmung (23, 24, 25) des zweiten Planetenträgers (4) mittels Formschluss gehalten ist, wobei das Federelement (11, 12, 13) durch eine Öffnung der Bohrung (23, 24, 25) in die Bohrung (23, 24, 25) eingesteckt ist.

8. Planetengetriebe (1) nach Anspruch 7, **dadurch gekennzeichnet, dass** der Durchmesser der Bohrung (23, 24, 25) des zweiten Planetenträgers (4) an zumindest einer ersten Abstufung (29) zu dem ersten Planetenträger (3) hin erweitert ist.

9. Planetengetriebe (1) nach einem der Ansprüche 7 und 8, **dadurch gekennzeichnet, dass** das stabförmige Ende (20) des Federelementes (11, 12, 13) stirnseitig an einer zweiten, an den Formschluss angrenzenden Abstufung (30) abgestützt ist.

10. Planetengetriebe (1) nach einem der Ansprüche 6 bis 9, **dadurch gekennzeichnet, dass** die Ausnehmung (23, 24, 25) mit einer Entlüftung verbunden ist.

11. Planetengetriebe (1) nach einem der Ansprüche 4 bis 10, **dadurch gekennzeichnet, dass** die Anzahl der an dem ersten Planetenträger (3) gelagerten Planetenräder (5, 6, 7) der Anzahl der an dem zweiten Planetenträger (4) gelagerten Planetenräder (8, 9, 10) entspricht, wobei vorzugsweise die Anzahl der Federelemente (11, 12, 13) der Anzahl der an dem ersten Planetenträger (3) angeordneten Planetenräder (5, 6, 7) entspricht.

12. Planetengetriebe (1) nach Anspruch 11, **dadurch gekennzeichnet, dass** das Planetengetriebe (1) genau drei Federelemente (11, 12, 13), genau drei erste sowie genau drei zweite Planetenräder (5, 6, 7, 8, 9, 10) umfasst.

13. Planetengetriebe nach einem der Ansprüche 4 bis 12, **dadurch gekennzeichnet, dass** zumindest ein Federelement (11, 12, 13) als Federstab ausgebildet ist, der im unverspannten Zustand gerade verläuft und über seine Länge einen konstanten, runden Querschnitt aufweist.

14. Planetengetriebe (1) nach einem der vorherigen Ansprüche, **dadurch gekennzeichnet, dass** die Planetenräder (5, 6, 7) des ersten Planetenträgers (3) und die Planetenräder (8, 9, 10) des zweiten Planetenträgers (4) durch Anliegen an dem Sonnenrad (2) und dem Hohlrad (16) zueinander vorgespannt sind.

15. Planetengetriebe (1) nach Anspruch 14, **dadurch gekennzeichnet, dass** im vorgespannten Zustand Zahnflanken des zumindest einen, an dem ersten Planetenträger (3) angeordneten Planetenrades (5, 6, 7) an einer ersten Seite von Zahnflanken des Hohlrades (16) und einer ersten Seite von Zahnflanken des Sonnenrades (2) anliegen, und Zahnflanken des zumindest einen, an dem zweiten Planetenträger (4) angeordneten Planetenrades (8, 9, 10) an einer zweiten, der ersten Seite der Zahnflanken des Sonnenrades (2) und Hohlrades (16) entgegengesetzten Seite der Zahnflanken des Hohlrades (16) und des Sonnenrades (2) anliegen.

## Claims

1. Backlash-free planetary gear unit (1) with a sun gear (2) and with a ring gear (16) which mesh with at least one first planet gear (5) of a planetary stage, wherein said planetary stage comprises a first planet carrier (3) on which said first planet gear (5) is rotatably mounted, wherein there is furthermore at least one second planet gear (8) in the planetary stage that also meshes with said ring gear (16) and said sun gear (2), wherein said at least one second planet gear (8) is rotatably supported at a second planet carrier (4) of said planetary stage, wherein said two planet carriers (3, 4) are in the circumferential direction of said sun gear (2) preloaded relative to each other such that said at least one first planet gear (5) is preloaded relative to said at least one second planet gear (8) in the circumferential direction of said sun gear (2), **characterized in that** said first planet gear (5) and said second planet gear (8) are arranged between said first planet carrier (3) and said second planet carrier (4).

2. Planetary gear unit according to claim 1, **characterized in that** the outer diameter of said assembled planetary gear unit (1) is less than 40 mm, preferably less than 32 mm, more preferably less than 22 mm.

3. Planetary gear unit according to one of the preceding claims **characterized in that** said first planet carrier (3) is designed as a component which is separate from said second planet carrier (4) and the two planet carriers (3, 4) are rotatable about a common axis, preferably about the axis of rotation (22) of said sun gear (2).

4. Planetary gear unit according to one of the preceding claims **characterized in that** there is at least one spring element (11, 12, 13) extending between said first and second planet carrier (3, 4) for preloading said first planet carrier (3) relative to said second planet carrier (4).

5. Planetary gear unit according to claim 4, **characterized in that** said spring element (11, 12, 13) comprises a first end (19) formed integrally onto said first planet carrier (3).

6. Planetary gear unit according to one of the claims 4 or 5, **characterized in that** said spring element (11, 12, 13) is supported at said first and/or said second planet carrier (3, 4) in a recess (23, 24, 25).

7. Planetary gear unit according to claim 6, **characterized in that** said spring element (11, 12, 13) comprises a second, bar-shaped end (20), which is by a positive-fit connection held in said recess (23, 24, 25) being designed as a bore of said second planet carrier (4), wherein said spring element (11, 12, 13) is inserted through an opening of said bore (23, 24, 25) into said bore (23, 24, 25).

8. Planetary gear unit (1) according to claim 7, **characterized in that** the diameter of said bore (23, 24, 25) of said second planet carrier (4) is widened at least at a first increment (29) towards said first planet carrier (3).

9. Planetary gear unit (1) according to one of the claims 7 and 8, **characterized in that** said bar-shaped end (20) of said spring element (11, 12, 13) is supported on the end face at a second increment (30) adjoining said positive-fit connection.

10. Planetary gear unit (1) according to one of the claims 6 to 9, **characterized in that** said recess (23, 24, 25) is connected to a vent.

11. Planetary gear unit (1) according to one of the claims 4 to 10, **characterized in that** the number of planet gears (5, 6, 7) being mounted at said first planet carrier (3) corresponds to the number of planet gears (8, 9, 10) mounted at said second planet carrier (4), wherein the number of spring elements (11, 12, 13) preferably corresponds to the number of planet gears (5, 6, 7) arranged at said first planet carrier (3).

12. Planetary gear unit (1) according to claim 11, **characterized in that** said planetary gear unit (1) comprises exactly three spring elements (11, 12, 13), exactly three first and exactly three second planet gears (5, 6, 7, 8, 9, 10).

13. Planetary gear unit according to one of claims 4 to 12, **characterized in that** at least one spring element (11, 12, 13) is formed as a spring bar extending linearly in the untensioned state and comprising a constant circular cross-section along its length.

14. Planetary gear unit (1) according to one of the preceding claims, **characterized in that** said planet gears (5, 6, 7) of said first planet carrier (3) and said planet gears (8, 9, 10) of said second planet carrier (4) are preloaded relative to each other by bearing against said sun gear (2) and said ring gear (16).

15. Planetary gear unit (1) according to claim 14, **characterized in that**, in the preloaded state, tooth flanks of said at least one planet gear (5, 6, 7) disposed at said first planet carrier (3) bear against a first side of tooth flanks of said ring gear (16) and a first side of tooth flanks of said sun gear (2), and tooth flanks of said at least one planet gear (8, 9, 10) disposed at said second planet carrier (4) bear against a second side of said tooth flanks of said ring gear (16) and the sun gear (2) which is disposed opposite to said first side of said tooth flanks of said sun gear (2) and said ring gear (16).

## Revendications

1. Train épicycloïdal (1) sans jeu de rotation relative, comprenant un pignon central (2) et une couronne (16), qui engrènent avec au moins un premier satellite (5) d'un étage de satellites, l'étage de satellites présentant un premier porte-satellites (3) sur lequel est monté rotatif le premier satellite (5), et dans l'étage de satellites est par ailleurs prévu au moins un deuxième satellite (8), qui engrène également avec la couronne (16) et le pignon central (2), ledit au moins un deuxième satellite (8) étant monté rotatif sur un deuxième porte-satellites (4) de l'étage de satellites, les deux porte-satellites (3, 4) étant précontraints l'un par rapport à l'autre dans la direction périphérique du pignon central (2), de manière telle que ledit au moins un premier satellite (5) soit également en contrainte par rapport au dit au moins un deuxième satellite (8) dans la direction périphérique du pignon central (2), **caractérisé en ce que** le premier satellite (5) et le deuxième satellite (8) sont agencés entre le premier porte-satellites (3) et le deuxième porte-satellites (4).

2. Train épicycloïdal selon la revendication 1, **caractérisé en ce que** le diamètre extérieur du train épicycloïdal (1) assemblé est inférieur à 40 mm, de préférence inférieur à 32 mm, et de manière particulièrement préférée inférieur à 22 mm.

3. Train épicycloïdal selon l'une des revendications précédentes, **caractérisé en ce que** le premier porte-satellites (3) est réalisé en tant que pièce distincte et séparée du deuxième porte-satellites (4), et les deux porte-satellites (3, 4) sont rotatifs autour d'un axe commun, de préférence autour de l'axe de rotation (22) du pignon central (2).

4. Train épicycloïdal selon l'une des revendications précédentes, **caractérisé en ce qu'**il est prévu au moins un élément de ressort (11, 12, 13) s'étendant entre le premier et le deuxième porte-satellites (3, 4), pour assurer la contrainte du premier porte-satellites (3) à l'encontre du deuxième porte-satellites (4).

5. Train épicycloïdal selon la revendication 4, **caractérisé en ce que** l'élément de ressort (11, 12, 13) présente une première extrémité (19) formée d'un seul tenant sur le premier porte-satellites (3).

6. Train épicycloïdal selon l'une des revendications 4 ou 5, **caractérisé en ce que** l'élément de ressort (11, 12, 13) s'appuie sur le premier et/ou le deuxième porte-satellites (3, 4) dans un évidement (23, 24, 25).

7. Train épicycloïdal selon la revendication 6, **caractérisé en ce que** l'élément de ressort (11, 12, 13) présente une deuxième extrémité (20) en forme de tige, qui est maintenue par complémentarité de formes dans l'évidement (23, 24, 25) réalisé sous forme d'alésage du deuxième porte-satellites (4), l'élément de ressort (11, 12, 13) étant inséré, à travers une ouverture de l'alésage (23, 24, 25), dans l'alésage (23, 24, 25).

8. Train épicycloïdal (1) selon la revendication 7, **caractérisé en ce que** le diamètre de l'alésage (23, 24, 25) du deuxième porte-satellites (4) est élargi vers le premier porte-satellites (3), au niveau d'au moins un premier étagement (29).

9. Train épicycloïdal (1) selon l'une des revendications 7 et 8, **caractérisé en ce que** l'extrémité (20) en forme de tige de l'élément de ressort (11, 12, 13) s'appuie frontalement contre un deuxième étagement (30) voisin de la liaison par complémentarité de formes.

10. Train épicycloïdal (1) selon l'une des revendications 6 à 9, **caractérisé en ce que** l'évidement (23, 24, 25) est relié à une purge d'air.

11. Train épicycloïdal (1) selon l'une des revendications 4 à 10, **caractérisé en ce que** le nombre des satellites (5, 6, 7) montés sur le premier porte-satellites (3) correspond au nombre de satellites (8, 9, 10) montés sur le deuxième porte-satellites (4), le nombre des éléments de ressort (11, 12, 13) correspondant de préférence au nombre des satellites (5, 6, 7) agencés sur le premier porte-satellites (3).

12. Train épicycloïdal (1) selon la revendication 11, **caractérisé en ce que** le train épicycloïdal (1) comprend exactement trois éléments de ressort (11, 12, 13), exactement trois premiers ainsi qu'exactement trois deuxièmes satellites (5, 6, 7, 8, 9, 10).

13. Train épicycloïdal selon l'une des revendications 4 à 12, **caractérisé en ce qu'**au moins un élément de ressort (11, 12, 13) est réalisé sous forme de tige de ressort, qui, dans l'état non contraint, s'étend de manière rectiligne, et présente sur toute sa longueur une section transversale ronde et constante.

14. Train épicycloïdal (1) selon l'une des revendications précédente, **caractérisé en ce que** les satellites (5, 6, 7) du premier porte-satellites (3) et les satellites (8, 9, 10) du deuxième porte-satellites (4) sont précontraints les uns envers les autres par appui contre le pignon central (2) et contre la couronne (16).

15. Train épicycloïdal (1) selon la revendication 14, **caractérisé en ce que** dans l'état précontraint, des flancs de dent dudit au moins un satellite (5, 6, 7) agencé sur le premier porte-satellites (3), s'appuient sur un premier côté de flancs de dent de la couronne (16) et un premier côté de flancs de dent du pignon central (2), et des flancs de dent dudit au moins un satellite (8, 9, 10) agencé sur le deuxième porte-satellites (4), s'appuient sur un deuxième côté des flancs de dent de la couronne (16) et du pignon central (2), qui est opposé au premier côté des flancs de dent du pignon central (2) et de la couronne (16).
